# EUROPEAN PATENT APPLICATION

(11) **EP 4 549 319 A1**
(43) Date of publication of application: **07.05.2025**
(21) Application number: 23207150.6
(22) Date of filing: 31.10.2023
(51) Int. Cl.: B64D 11/04

(54) **TILT PROTECTION FOR AIRCRAFT GALLEY INSERTS**

(71) Applicant: B/E Aerospace, Inc., Winston-Salem, NC 27105 (US)
(72) Inventor: SCOTT, William Kristofor, 3124 RD Schiedam (NL)
(74) Representative: Dehns

(57) **Abstract**

An aircraft galley insert (10), such as an oven or beverage maker, comprises a sensor (16) for determining a tilt angle (A) of the aircraft galley insert (10) with respect to a horizontal plane, and a controller (18) operatively connected to the tilt sensor (16), wherein the controller (18) is configured to receive a signal from the tilt sensor indicating the tilt angle (A) of the aircraft galley insert (10), and control operation of the aircraft galley insert (10) based on the tilt angle (A).

## Description

### TECHNICAL FIELD

This disclosure relates to systems and methods for detecting tilting of aircraft galley inserts, such as ovens, and mitigating the effects of the tilting.

### BACKGROUND

Aircraft galley inserts, such as ovens and water heaters, are used for food and beverage preparation onboard an aircraft. However, problems can arise due to spillage of fluids from containers that form part of the galley inserts or are placed inside the galley inserts, for example to heat food or beverages inside the container.

In various phases of flight, an aircraft will rotate to vary its angle of attitude, or pitch angle. For example, during take-off the angle of attitude of an aircraft may be up to about 20°. A high angle of attitude may also occur during other aircraft manoeuvres and situations, such as during climb and turbulence.

When the aircraft rotates to increase its angle of attitude during a tilt event such as take-off, food and beverage containers are also tilted at an angle corresponding to the angle of attitude of the aircraft. This means that the contents of the containers may spill inside or out of a galley insert due to a combination of poorly sealed or open containers and a high angle of attitude.

Cabin crew may turn on galley inserts ahead of take-off in order to begin the cooking/heating process. This enables meals and hot beverages to be prepared and served more quickly for the passengers, completing their meal service in a compressed timeline. For example, a galley insert oven may be turned on before take-off to begin cooking frozen meals. What this means, however, is that the frozen meals will at least partially defrost inside the oven ahead of aircraft rotation during take-off, allowing for spillage of fluids from poorly sealed or open containers inside the oven when the aircraft rotates. Spillage inside the oven may also occur during other aircraft manoeuvres and situations involving a high angle of attitude. This spillage may cause adverse effects within the oven, such as smoke, smells and contamination, which may result in disruption to the use of the oven. Spillages inside the oven may also increase the risk of fire, particularly if fluids come into contact with the heating element inside the oven, which can be a catastrophic event onboard an aircraft.

Therefore, there is a need to mitigate the effect of aircraft manoeuvres for galley inserts.

### SUMMARY

An aspect of the present disclosure provides an aircraft galley insert, such as an oven or beverage maker, comprising: a sensor for determining a tilt angle of the aircraft galley insert with respect to a horizontal plane; and a controller operatively connected to the tilt sensor, wherein the controller is configured to receive a signal from the tilt sensor indicating the tilt angle of the aircraft galley insert, and control operation of the aircraft galley insert based on the tilt angle.

The aircraft galley insert may further comprise a chamber; and heating means for heating the chamber, wherein the controller is operatively connected to the heating means and is configured to control operation of the heating means based on the tilt angle. The heating means may be a heating element.

The controller may be configured to reduce heat generated by the heating means, for example by about 25%, about 50% or about 75%, or deactivate the heating means when the tilt angle exceeds a first predetermined upper limit.

The controller may be configured to increase the heat generated by the heating means or reactivate the heating means when the tilt angle falls below the first predetermined upper limit.

The controller may be configured to reduce heat generated by the heating means when the tilt angle exceeds the first predetermined upper limit, and deactivate the heating means when the tilt angle exceeds a second predetermined upper limit that is higher than the first predetermined upper limit.

The aircraft galley insert may be an oven and the heating means may comprise a heating element. The oven may comprise at least one baffle plate separating the chamber from the heating element. The baffle plate may comprise one or more openings to allow air to flow between the chamber and the heating element.

The oven may comprise a fan for circulating air within the chamber, and the controller is operatively connected to the fan and configured to control operation of the fan based on the tilt angle. The fan may also be separated from the chamber by the baffle plate, and may be located adjacent the heating element. The fan may help to circulate airflow between the heating element and the chamber via the one or more openings in the baffle plate.

The controller may be configured to reduce a rotational speed of the fan, for example by about 25%, about 50% or about 75%, stop rotation of the fan or reverse a direction of rotation of the fan when the tilt angle exceeds a third predetermined upper limit.

The controller may be configured to increase a rotational speed of the fan, restart rotation of the fan or reverse the direction of rotation of the fan when the tilt angle falls below the third predetermined upper limit.

The controller may be configured to reduce a rotational speed of the fan when the tilt angle exceeds the third predetermined upper limit, and stop or reverse a direction of rotation of the fan when the tilt angle exceeds a fourth predetermined upper limit that is higher than the third predetermined upper limit. The first and third predetermined upper limits may be at the same tilt angle, and/or the second and fourth predetermined upper limits may be at the same tilt angle.

In any of the above aspect and examples, the sensor may comprise any kind of sensor that is suitable for indicating a tilt angle of the aircraft galley insert relative to a horizontal plane, i.e., the tilting of the aircraft galley insert due to the angle of attitude of the aircraft. For example, the sensor may comprise any of an inclinometer or tilt sensor, an angular position sensor and a vibration gyro sensor. The sensor may provide four-degrees-of-freedom angular position sensing. The sensor may be coupled to the aircraft galley insert by any suitable means and at any suitable location to enable the sensor to detect the tilting. The sensor may be incorporated within the controller, for example as a component such as a vibration gyro sensor within an electronic control module. The sensor may alternatively be a separate component such as an angular position sensor that is coupled to the aircraft galley insert and communicatively coupled to the controller. The controller may be located within, adjacent or remote from the aircraft galley insert.

Another aspect of the present disclosure provides an aircraft comprising the aircraft galley insert of any of the above aspect and examples.

Another aspect of the present disclosure provides a method for controlling operation of an aircraft galley insert (e.g., on board an aircraft), such as an oven or beverage maker, the method comprising: measuring a tilt angle of an aircraft galley insert with respect to a horizontal plane; and automatically controlling operation of the aircraft galley insert based on the tilt angle of the aircraft galley insert.

The method may further comprise heating a chamber of the aircraft galley insert, wherein automatically controlling operation of the aircraft galley insert based on the tilt angle of the galley insert comprises regulating an amount of heat provided to the chamber.

Regulating an amount of heat provided to the chamber based on the tilt angle of the aircraft galley insert may comprise reducing the amount of heat provided to the chamber or deactivating a heating means, such as a heating element, configured to provide heat to the chamber when the tilt angle exceeds a first predetermined upper limit.

Regulating an amount of heat provided to the chamber based on the tilt angle of the aircraft galley insert may comprise reducing the amount of heat provided to the chamber for example by about 25%, about 50% or about 75%, when the tilt angle exceeds a first predetermined upper limit, and deactivating a heating means, such as a heating element, configured to provide heat to the chamber when the tilt angle exceeds a second predetermined upper limit that is higher than the first predetermined upper limit.

Regulating an amount of heat provided to the chamber based on the tilt angle of the aircraft galley insert may further comprise increasing the amount of heat provided to the chamber or reactivating the heating means when the tilt angle falls below the first predetermined upper limit.

The aircraft galley insert may be an oven. The method may further comprise operating a fan to circulate air within the chamber, and controlling operation of the fan based on the tilt angle of the oven.

Controlling operation of the fan based on the tilt angle of the oven may comprise reducing the rotational speed of the fan, stopping rotation of the fan or reversing a direction of rotation of the fan when the tilt angle exceeds a third predetermined upper limit.

Controlling operation of the fan based on the tilt angle of the oven may further comprise increasing the rotational speed of the fan, restarting rotation of the fan or reversing a direction of rotation of the fan, when the tilt angle falls below the third predetermined upper limit.

Controlling operation of the fan based on the tilt angle of the oven may comprise reducing a rotational speed of the fan for example by about 25%, about 50% or about 75%, when the tilt angle exceeds the third predetermined upper limit and stopping or reversing a direction of rotation of the fan when the tilt angle exceeds a fourth predetermined upper limit that is higher than the third predetermined upper limit. The first and third predetermined upper limits may be at the same tilt angle, and/or the second and fourth predetermined upper limits may be at the same tilt angle.

Controlling operation of the fan based on the tilt angle of the oven may comprise rotating the fan in a first direction when the tilt angle is below or at the third predetermined upper limit, and rotating the fan in a second direction of the fan when the tilt angle exceeds the third predetermined upper limit.

### BRIEF DESCRIPTION OF DRAWINGS

One or more non-limiting examples will now be described, by way of example only, and with reference to the accompanying figures in which:
Figure 1 shows a schematic example of an aircraft undergoing a tilt event;
Figure 2 shows a schematic cross-sectional view of an example galley insert oven in accordance with an embodiment of the present disclosure; and
Figure 3 shows the galley insert oven of Figure 2 undergoing a tilt event.

### DETAILED DESCRIPTION

The following description relates mainly to galley insert ovens, however the disclosure is also applicable to other types of aircraft galley inserts, such as water heaters, beverage makers, coffee makers and other appliances for heating food and beverages on an aircraft.

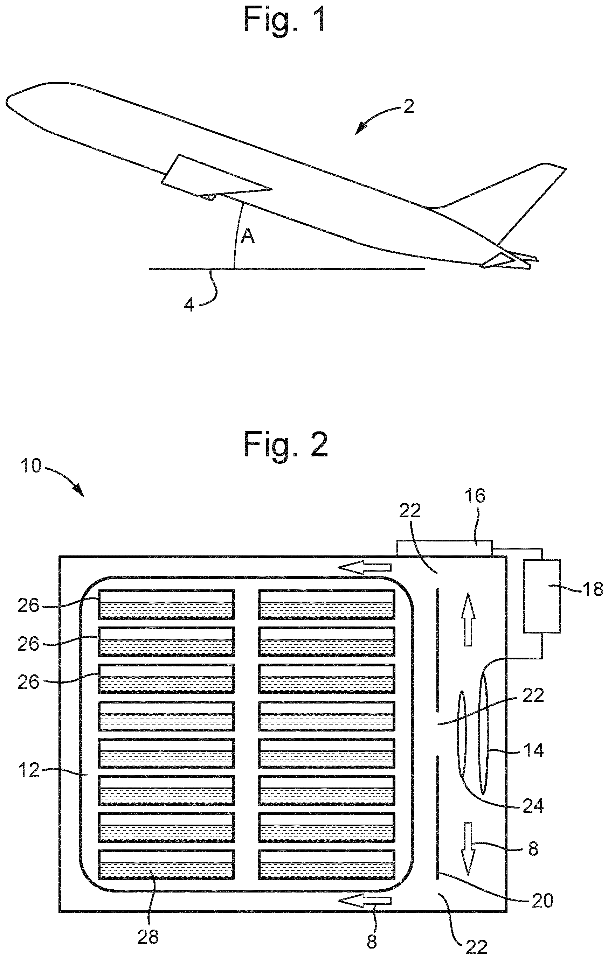

Figure 1 shows a schematic example of the angle of attitude A of an aircraft 2 undergoing rotation during a tilt event, such as take-off.

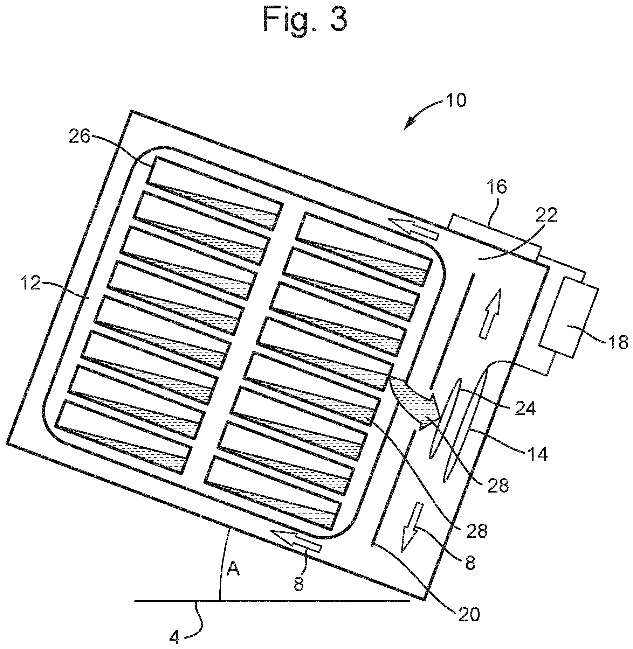

With reference to Figures 2 and 3, an example of an aircraft galley insert 10 for heating food or beverages comprises a chamber 12 for holding contents to be heated, a means 14 for heating the chamber 12 and a sensor 16 for measuring a tilt angle A of the galley insert 10. A controller 18, such as an electronic control unit or electronic control module, is operatively connected to the heating means 14 and the sensor 16 to enable control of the heating means 14 based on the output of the sensor 16.

For example, the galley insert 10 may be installed in the aircraft 2 of Figure 1. Figure 2 shows an example of the galley insert 10 in a horizontal position, for example when the aircraft 2 is on the ground or during cruise. Figure 3 shows an example of the galley insert 10 in a tilted position, for example when the aircraft 2 is taking off, climbing or undergoing turbulence. Figure 3 shows that the angle A by which the galley insert 10 is tilted with respect to a horizontal plane 4 is the same as the angle of attitude A of the aircraft 2 in Figure 1.

The galley insert 10 shown in Figures 2 and 3 is exemplified as an oven 10 and the chamber 12 is an oven compartment 12 for heating food. The means for heating the chamber 12 is provided by a heating element 14. At least one baffle plate 20 separates the chamber 12 from the heating element 14. The baffle plate 20 has one or more openings 22 to allow air to flow between the chamber 12 and the heating element 14 to enable convection heating of the chamber 12 by the heating element 14. In this example, the baffle plate 20 has a plurality of openings 22.

The oven 10 also comprises a rotating fan 24, separated from the chamber 12 by the baffle plate 20. The fan 24 helps to circulate airflow, shown by arrows 8, between the heating element 14 and the chamber 12 via the openings 22 in the baffle plate 20 to promote convection heating. In this example, the fan 24 is located adjacent the heating element 14.

The sensor 16 comprises any kind of sensor that is suitable for indicating a tilt angle A of the oven 10 relative to a horizontal plane 4, i.e., the tilting of the oven 10 due to the angle of attitude A of the aircraft 2. For example, the sensor 16 may comprise any of an inclinometer or tilt sensor, an angular position sensor and a vibration gyro sensor. The sensor 16 may provide four-degrees-of-freedom angular position sensing. The sensor 16 may be coupled to the oven 10 by any suitable means and at any suitable location to enable the sensor 16 to detect the tilting. The sensor 16 may be incorporated within the controller 18, for example as a component such as a vibration gyro sensor within an electronic control module. The sensor 16 may alternatively be a separate component such as an angular position sensor that is communicatively coupled to the controller 18. The controller 18 may be located within, adjacent or remote from the oven 10.

The sensor 16 is operatively connected to the controller 18 to provide an input signal to the controller 18 that indicates the tilt angle A of the oven 10 relative to the horizontal plane 4. The tilt angle A of the oven 10 corresponds to the angle of attitude A of the aircraft 2. The controller 18 is connected to the heating element 14 to control the heat output by the heating element 14 based on the determined tilt angle A. The controller 18 may also be connected to the fan 24 to control the rotational speed and/or direction of the fan 24 based on the determined tilt angle A.

Figures 2 and 3 show an array of meal containers 26 (which are not part of the oven 10 itself) arranged in the oven compartment 12, each meal container 26 comprising food and/or liquid contents 28 to be cooked in the oven 10. The meal containers 26 and their contents 28 may initially be frozen when the containers 26 are first put into the oven 10, and are then defrosted and cooked by the heat of the oven 10.

Figure 3 shows that, during a tilt event of the aircraft 2, such as take-off, the galley insert oven 10, including the meal containers 26 inside the oven compartment 12, will also be tilted to the angle of attitude A of the aircraft 2. During such a tilt, the containers 26 inside the oven compartment 12 will be at risk of spilling their contents 28, which may have at least partially defrosted, into the oven compartment 12.

The baffle plate 20 helps to protect the heating element 14 and fan 24 from the contents 28 of the chamber 12, for example from spilled food contents 28 from the containers 26. However, due to the presence of one or more openings 22 in the baffle plate 20 to enable convection heating of the chamber 12 by the heating element 14 and fan 24, there is still a risk of spillages 28 in the chamber 12 leaking through the baffle plate 20 via the openings 22, as demonstrated in Figure 3, and coming into contact with the heating element 14 and/or fan 24.

If fluid from the containers 26 comes into contact with the heating element 14, the heat from the heating element 14 may cause a build-up of burnt matter on the heating element 14 and elsewhere behind the baffle plate 20. This may result in smoke generation, an increased risk of fire and thus the oven 10 being out of use until the heating element 14 can be properly cleaned.

The risk of spillages leaking through the baffle plate 20 from the oven compartment 12 may be exacerbated by the airflow produced by the fan 24, which may generate suction through at least one of the openings 22 and aid the ingress of spilled fluids through the opening(s) 22. Furthermore, if spilled fluids come into contact with the fan 24, the rotation of the fan 24 may spread the fluids further.

These problems may be amplified in an oven 10 that is designed to operate with a lower power consumption by reducing the thermal energy output of the heating element 14. In order to mitigate the effects of reduced heat from the heating element 14, the airflow through the oven 10 may be increased to boost the convective heating effect. Increased airflow may be achieved by increasing the speed of the fan 24 and/or increasing the area or number of the openings 22 in the baffle plate 20. However, higher fan speeds and larger or more numerous openings 22 can exacerbate the problem of spilled fluids in the oven 10 coming into contact with the fan 24 and heating element 14 because the fluids are more readily drawn through the baffle plate 20.

To mitigate these problems, the controller 18 may be programmed to control operation of the heating element 14 and/or the fan 24 to interrupt a cooking cycle when the sensor 16 indicates that the oven 10 is tilted too far, e.g., when the aircraft 2 is at a high angle of attitude A.

To avoid smoke events due to fluids from meal containers 26 spilling onto the heating element 14 when the aircraft 2 is at a high angle of attitude A, the controller 18 is programmed to deactivate or reduce the thermal output of the heating element 14. In some examples, the controller 18 is programmed to automatically deactivate the heating element 14 so that the heating element 14 no longer generates heat when the tilt angle A increases beyond a predetermined upper limit or threshold. In other examples, the controller 18 is programmed to automatically reduce the thermal output of the heating element 14, for example by about 25%, about 50% or about 75%, when the tilt angle A increases beyond a predetermined upper limit. In some examples, the predetermined upper limit for the tilt angle A is in a range of about 5° to about 15°, for example about 10°.

The amount of reduction in thermal output and/or the predetermined tilt angle upper limit for initiating regulation of the thermal output of the heating element 14 may be chosen according to the level of tilt protection desired for the oven. For example, the lower the temperature of the heating element 14 (i.e., the greater the reduction in thermal output), the greater the protection from smoke events caused by spillages when the oven 10 is tilted. For example, deactivating the heating element 14 or reducing the thermal output by about 75% when tilting is detected may provide greater protection from the effects of spillages than only reducing the thermal output by 25%. However, rather than deactivating the heating element 14, it may be desired to maintain some level of thermal output during a tilt event to continue providing heat to the food inside the oven 10. Partially reducing the thermal output, for example by about 25%, about 50% or about 75%, may still be beneficial due to a lower temperature of the heating element and so there may still be a lower risk of burning and smoke events cause by spillages.

Furthermore, the lower the tilt angle A at which the tilt protection from the heating element 14 is initiated, the greater the level of tilt protection provided. For example, deactivating the heating element 14 when a tilt angle A exceeds about 5° will initiate the tilt protection earlier in the tilt event than if the heating element 14 is deactivated when tilt angle A exceeds about 10° or 15°, and therefore may provide greater protection from smoke events caused by spillages when the oven 10 is tilted. However, it may be desirable to wait for a larger tilt angle A before deactivating or reducing the thermal output of the heating element 14, for example to continue cooking the food for longer.

In another example, the controller 18 is programmed to reduce the thermal output of the heating element 14 when the tilt angle A increases beyond a first predetermined upper limit or threshold, and then deactivate the heating element 14 when the tilt angle A increases further beyond a second, higher predetermined upper limit. The first and second upper limits may be in the range of about 5° to about 15°. For example, the first upper limit may be about 10° and the second upper limit may be about 15°. In some examples, more than two different upper limits may be used to control the thermal output of the heating element 14. The thermal output may be reduced gradually as the tilt angle A increases. The thermal output may be reduced in a stepwise manner (for example, by about 25% or 50% each time) as the tilt angle A surpasses each of a plurality of thresholds (for example, about 5°, about 10° and about 15°). The use of multiple tilt angle thresholds helps to refine the operation of the controller 18 to more precisely regulate the thermal output of the heating element 14 according to how far the oven 10 is being tilted.

To reduce air circulation and suction that may draw spilled fluids towards the fan 24 and the heating element 14 when the aircraft is at a high angle of attitude, in some examples the controller 18 may also be programmed to slow, stop or reverse the fan 24. Slowing the rotational speed of the fan 24 may reduce the suction effect and thus reduce the amount of fluids that are draw through the baffle plate 20 and come into contact with the heating element 14 and fan 24. Completely stopping the rotation of the fan 24 will eliminate the suction from the fan 24. Reversing the rotation of the fan 24 may result in a reversal of the suction effect and actively direct spilled fluids away from the fan 24 and heating element 14.

The controller 18 may be programmed to automatically reduce the speed of the fan 24, for example by about 25%, about 50% or about 75%, when the tilt angle A increases beyond a predetermined upper limit or threshold. In some examples, the upper limit for the tilt angle A is in a range of about 5° to about 15°, for example about 10°. Alternatively, the controller 18 is programmed to automatically stop the fan 24 so that the fan 24 no longer rotates when the tilt angle A increases beyond the predetermined upper limit. Alternatively or additionally, the controller 18 is programmed to automatically reverse the direction of rotation of the fan 24 when the tilt angle A increases beyond a predetermined upper limit, which may be the same as or different to the tilt angle upper limit for slowing or stopping the fan.

The amount of reduction in fan speed and/or the predetermined tilt angle upper limit for initiating control over the fan speed and/or direction may be chosen according to the level of tilt protection desired for the oven. For example, the lower the speed of the fan 24, the lower the suction effect produced by the fan 24 and thus the greater the protection from contamination behind the baffle plate 20 and smoke events caused by spillages when the oven 10 is tilted. For example, stopping rotation of the fan 24 or reducing the fan speed by about 75% when tilting is detected may provide greater protection from the effects of spillages than only reducing the fan speed by about 50% or about 25%. However, rather than completely stopping the fan 24, it may be desired to maintain some level of additional air circulation from the fan 24 during a tilt event to continue assisting the convention heating inside the oven 10. Partially reducing the speed of the fan 24, for example by about 25%, about 50% or about 75%, may still be beneficial due to a lower suction effect and so there may still be a lower risk of contamination and smoke events cause by spillages. Reversing the direction of the fan 24 may provide an even greater level of tilt protection than stopping the fan 24, and will still provide a level of air circulation inside the oven 10.

Furthermore, the lower the tilt angle A at which the tilt protection from the fan 24 is initiated, the greater the level of tilt protection provided. For example, stopping, slowing or reversing the fan 24 when a tilt angle A exceeds about 5° will initiate the tilt protection earlier in the tilt event than if the fan 24 is only stopped, slowed or reversed when the tilt angle A exceeds about 10° or 15°, and therefore may provide greater protection from contamination and smoke events caused by spillages when the oven 10 is tilted. However, it may be desirable to wait for a larger tilt angle A before stopping, slowing or reversing the fan 24, for example to continue providing the air circulation for longer.

In another example, the controller 18 is programmed to reduce the rotational speed of the fan 24 when the tilt angle A increases beyond a first predetermined upper limit or threshold, and then stop rotation of the fan 24 or reverse the direction of rotation of the fan 24 when the tilt angle A increases further beyond a second, higher predetermined upper limit. In some examples, the controller 18 may be programmed to stop the fan 24 at a second predetermined upper limit higher than the first upper limit, and then reverse the fan 24 at a third predetermined upper limit, higher than the second upper limit. The first, second and third upper limits may be in the range of about 5° to about 15°. For example, the first upper limit may be about 10° and the second upper limit may be about 15°. The first upper limit may be 5°, the second upper limit may be 10° and the third upper limit may be 15°. In some examples, any number of different upper limits may be used to control the operation/speed of the fan 24. The speed may be reduced gradually as the tilt angle A increases. The speed may be reduced in a stepwise manner (for example, by about 25% or 50% each time) as the tilt angle A surpasses each of a plurality of thresholds (for example, about 5°, about 10° and about 15°). The use of multiple tilt angle thresholds helps to refine the operation of the controller 18 to more precisely regulate the operation of the fan 24 according to how far the oven 10 is being tilted.

The predetermined tilt angle upper limits for controlling operation of the fan 24 may be the same as or different to the tilt angle upper limits for controlling operation of the heating element 14.

In some examples, the controller 18 may be programmed to control operation of the heating element 14 and/or the fan 24 to resume a normal cooking cycle when the sensor 16 indicates that the aircraft 2 has returned to a lower angle of attitude from the previously determined high angle of attitude. For example, the controller 18 may be programmed to automatically reactivate the heating element 14 and/or increase the thermal output when the tilt angle A falls back below the predetermined upper limit, or the respective first or second predetermined upper limit, to resume the interrupted cooking cycle. The controller 18 may increase the thermal output of the heating element 14 to return it to the original level before thermal output was decreased in response to the tilt angle A exceeding the upper limit.

The controller 18 may additionally or alternatively be programmed to automatically increase the speed of the fan 24, restart the fan 24, or restore the original direction of rotation of the fan 24 to resume the interrupted cooking cycle when the tilt angle A falls back below the predetermined upper limit, or the respective predetermined first or second upper limit. The controller 18 may increase the rotational speed of the fan 24 to return the speed to the original level before speed was decreased in response to the tilt angle A exceeding the upper limit.

The present disclosure enables monitoring for increases in the tilt angle A of a galley insert oven 10 during a tilt event of the aircraft when the angle of attitude A increases, such as take-off, and consequently interrupting the normal cooking cycle of the oven 10 to protect the oven 10 from the adverse effects of spillages inside the oven 10 caused by the tilting. Also provided is the ability to subsequently automatically resume the cooking cycle of the oven 10 after the tilt event is complete, when the aircraft 2 and oven 10 have returned to a more acceptable orientation. The high angles of attitude A that occur during tilt events such as take-off are not generally of long duration, so the interruption to the cooking only results in a relatively short delay that is not significant in terms of cooking time. This enables cooking to be started before take-off to have meals prepared sooner, while avoiding smoke events, smells and contamination in the oven 10 that can occur when the oven 10 is tilted during take-off.

It will be understood that similar advantages for avoiding spillages and/or the adverse effects of spillages can also be achieved for other types of aircraft galley inserts, such as beverage makers, by controlling their operation based on a detected tilt angle.

For example, if a beverage maker is brewing when tilted, the brewing water/fluid can flow over the edge of the brewing vessel instead of filtering through the brew head. Therefore, fluid flow into the brewing vessel (i.e., a chamber) may also be controlled depending on the tilt angle of the brewing vessel as determined by a tilt sensor that may be coupled to the brewing vessel. For example, the fluid flow rate into the brewing vessel may be decreased (by the controller) when the tilt angle exceeds a predetermined limit, and may be increased back to the original rate when the tilt angle falls back below the predetermined limit. In other examples, fluid flow into the brewing vessel may be stopped (by the controller) when the tilt angle exceeds a predetermined limit, and may restart when the tilt angle falls back below the predetermined limit. Control of fluid flow into the brewing vessel based on the tilt angle may be in addition to, or instead of, controlling the heating of the brewing vessel based on the tilt angle, in a corresponding manner to the control of the heating element of the oven as described above. By slowing or interrupting the flow of water/fluid into the brewing vessel, the likelihood that more (hot) fluids will run over the edge of the brewing vessel is decreased and the volume of spillages may be reduced or avoided. Control of fluid flow into the brewing vessel based on the tilt angle may be in addition to, or instead of, controlling the heating of the brewing vessel based on the tilt angle, in a corresponding manner to the control of the heating element of the oven as described above.

The present disclosure generally provides for monitoring for increases in the tilt angle of a galley insert during a tilt event of an aircraft when the aircraft's angle of attitude A increases, such as during take-off, and consequently interrupting the normal operation of the galley insert to provide protection from spillages and/or the adverse effects of spillages caused by the tilting of the galley insert. Also provided is the ability to subsequently resume normal operation of the galley insert after the tilt event is complete.

Although this disclosure has been described in terms of preferred examples, it should be understood that these examples are illustrative only and that the scope of the claims is not limited to those examples. Those skilled in the art will be able to make modifications and alternatives in view of the disclosure which are contemplated as falling within the scope of the appended claims.

## Claims

1. An aircraft galley insert (10) comprising:
a sensor (16) for determining a tilt angle (A) of the aircraft galley insert (10) with respect to a horizontal plane; and
a controller (18) operatively connected to the tilt sensor (16), wherein the controller (18) is configured to receive a signal from the tilt sensor indicating the tilt angle (A) of the aircraft galley insert (10), and control operation of the aircraft galley insert (10) based on the tilt angle (A).

2. The aircraft galley insert (10) of claim 1, further comprising:
a chamber (12); and
heating means (14) for heating the chamber (12),
wherein the controller (18) is operatively connected to the heating means (14) and is configured to control operation of the heating means (14) based on the tilt angle (A).

3. The aircraft galley insert of claim 2, wherein the controller (18) is configured to reduce heat generated by the heating means (14) or deactivate the heating means (14) when the tilt angle (A) exceeds a first predetermined upper limit, and, optionally wherein the controller (18) is configured to increase the heat generated by the heating means (14) or reactivate the heating means (14) when the tilt angle (A) falls below the first predetermined upper limit.

4. The aircraft galley insert of claim 3, wherein the controller (18) is configured to reduce heat generated by the heating means (14) when the tilt angle (A) exceeds the first predetermined upper limit, and deactivate the heating means (14) when the tilt angle (A) exceeds a second predetermined upper limit that is higher than the first predetermined upper limit.

5. The aircraft galley insert of claim 2, 3 or 4, wherein the aircraft galley insert (10) is an oven (10).

6. The aircraft galley insert of claim 5, wherein the oven (10) comprises a fan (24) for circulating air within the chamber (12), and the controller (18) is operatively connected to the fan (24) and configured to control operation of the fan (24) based on the tilt angle (A).

7. The aircraft galley insert of claim 6, wherein the controller (18) is configured to reduce a rotational speed of the fan (24), stop rotation of the fan (24) or reverse a direction of rotation of the fan (24) when the tilt angle (A) exceeds a third predetermined upper limit, and, optionally, wherein the controller (18) is configured to increase a rotational speed of the fan (24), restart rotation of the fan (24) or reverse the direction of rotation of the fan (24) when the tilt angle (A) falls below the third predetermined upper limit.

8. The aircraft galley insert of claim 7, wherein the controller (18) is configured to reduce a rotational speed of the fan (24) when the tilt angle (A) exceeds the third predetermined upper limit, and stop or reverse a direction of rotation of the fan (24) when the tilt angle (A) exceeds a fourth predetermined upper limit that is higher than the third predetermined upper limit.

9. A method for controlling operation of an aircraft galley insert (10), the method comprising:
measuring a tilt angle (A) of an aircraft galley insert (10) with respect to a horizontal plane; and
automatically controlling operation of the aircraft galley insert (10) based on the tilt angle (A) of the galley insert (10).

10. The method of claim 9, further comprising heating a chamber (12) of the aircraft galley insert (10), wherein automatically controlling operation of the aircraft galley insert (10) based on the tilt angle (A) of the galley insert (10) comprises regulating an amount of heat provided to the chamber (12).

11. The method of claim 10, wherein regulating an amount of heat provided to the chamber (12) based on the tilt angle (A) of the aircraft galley insert (10) comprises reducing the amount of heat provided to the chamber (12) or deactivating a heating means (14) configured to provide heat to the chamber (12) when the tilt angle (A) exceeds a first predetermined upper limit, or
wherein regulating an amount of heat provided to the chamber (12) based on the tilt angle (A) of the aircraft galley insert (10) comprises reducing the amount of heat provided to the chamber (12) when the tilt angle (A) exceeds a first predetermined upper limit, and deactivating a heating means (14) configured to provide heat to the chamber (12) when the tilt angle (A) exceeds a second predetermined upper limit that is higher than the first predetermined upper limit.

12. The method of claim 11, wherein regulating an amount of heat provided to the chamber (12) based on the tilt angle (A) of the aircraft galley insert (10) further comprises increasing the amount of heat provided to the chamber (12) or reactivating the heating means (14) when the tilt angle (A) falls below the first predetermined upper limit.

13. The method of claim 10, 11 or 12, wherein the aircraft galley insert (10) is an oven (10), and further comprising operating a fan (24) to circulate air within the chamber (12), and controlling operation of the fan (24) based on the tilt angle (A) of the oven (10).

14. The method of claim 13, wherein controlling operation of the fan (24) based on the tilt angle (A) of the oven (10) comprises reducing the rotational speed of the fan (24), stopping rotation of the fan (24) or reversing a direction of rotation of the fan (24) when the tilt angle (A) exceeds a third predetermined upper limit, and optionally further comprises increasing the rotational speed of the fan (24), restarting rotation of the fan (24) or reversing a direction of rotation of the fan (24), when the tilt angle (A) falls below the third predetermined upper limit.

15. The method of claim 14, wherein controlling operation of the fan (24) based on the tilt angle (A) of the oven (10) comprises reducing a rotational speed of the fan (24) when the tilt angle (A) exceeds the third predetermined upper limit and stopping or reversing a direction of rotation of the fan (24) when the tilt angle (A) exceeds a fourth predetermined upper limit that is higher than the third predetermined upper limit.
